# EUROPÄISCHE PATENTANMELDUNG

(11) **EP 4 640 530 A1**
(43) Veröffentlichungstag der Anmeldung: **29.10.2025**
(21) Anmeldenummer: 25160408.8
(22) Anmeldetag: 26.02.2025
(51) Int. Cl.: B62D 21/17, B60K 11/00

(54) **KÜHLVORRICHTUNGSANORDNUNG**

(30) Priorität: 22.04.2024 DE 102024111140
(71) Anmelder: AUDI AG, 85057 Ingolstadt (DE)
(72) Erfinder: Thurmeier, Markus, 84166 Adlkofen (DE); Dirisamer, Florian, 4710 St. Georgen / Grieskirchen (AT)

(57) **Zusammenfassung**

Die Erfindung betrifft eine Kühlvorrichtungsanordnung (10), umfassend ein Fahrzeugkarosserieelement (14) mit einem Hohlprofil, das einen Aufnahmeraum bereitstellt; und eine Kühlvorrichtung (12), umfassend ein Innenprofilbauteil (16) an dessen Außenfläche ein Transportkanal (24) vorgesehen ist, der von einem Wärmeträgerfluid durchströmbar ist; wobei Abmessungen der Kühlvorrichtung (12) derart an das Hohlprofil angepasst sind, dass die Kühlvorrichtung (12) in den Aufnahmeraum des Hohlprofils einschiebbar ist und formschlüssig und ohne Verklebung in dem Aufnahmeraum gehalten ist.

## Beschreibung

Die Erfindung betrifft eine Kühlvorrichtungsanordnung, insbesondere auf dem Gebiet von Kraftfahrzeugen.

Aktuell wird überschüssige Wärme in Kraftfahrzeugen durch erhöhten Kühlbedarf mittels Lüftern oder Klimakompressoren heruntergekühlt, was eine relativ große Menge an Energie benötigt. Zudem sind Fahrzeugkühlsysteme üblicherweise ausgelastet und können bei hohen Kühlleistungen, welche insbesondere beim Superschnellladen über 200 kW erreichen, nicht mehr heruntergekühlt werden, wodurch eine Ladeleistung verringert wird. Des Weiteren benötigen aktuelle Kühlvorrichtungen viel Raum und sind im Kraftfahrzeug fest verbaut, insbesondere verklebt, was einen Austausch defekter Kühlvorrichtungen erschwert.

Aus der CN 116 262 434 A sind ein Fahrzeugseitenträger, ein elektrisches Antriebssystem, eine Antriebsstrangbaugruppe und ein entsprechendes Fahrzeug bekannt. Der Fahrzeugseitenträger umfasst einen Profilkörper, der Profilkörper umfasst ferner eine Schale und ein Führungsrohr, wobei das Führungsrohr in der Schale angeordnet ist, und wobei das Führungsrohr mit einer Kühlflüssigkeitspumpe und einem elektrischen Antrieb mit dem Kühlsystem verbunden ist und Kühlflüssigkeit zwischen der Kühlflüssigkeitspumpe und dem elektrischen Antrieb überträgt.

Aus der DE 10 2017 103 268 A1 ist eine elektrische Leiteranordnung umfassend zumindest ein Leiterprofil bekannt. Das Leiterprofil ist stangengepresst und besteht aus einer Leichtmetalllegierung, wobei das Leiterprofil mindestens einen umfangseitig geschlossenen Kanal aufweist. Vorzugsweise besteht das Leiterprofil aus einer Aluminiumknetlegierung. Der Kanal ist insbesondere zur Durchleitung eines Wärmeträgermediums ausgelegt. Mehrere Leiterprofile sind zu einem Leiterstrang aneinandergekoppelt, welcher in einem Kraftfahrzeug zum Einsatz gelangt. Hierbei kann eine elektrische Leiteranordnung den elektrischen Pfad zwischen einer Ladedose und dem elektrischen Energiespeicher bilden.

Aus der DE 10 2015 011 866 A1 ist eine Wärmeübertragungsanordnung für ein Kraftfahrzeug bekannt, mit wenigstens einem Wärmerohr, das einerseits über einen Wärmetauscher an eine Wärmequelle und andererseits eine Wärmesenke angeschlossen ist. Dabei ist vorgesehen, dass dem Wärmetauscher ein Latentwärmespeicher zugeordnet ist.

Die Aufgabe der Erfindung ist es, eine Kühlvorrichtung in einer Kühlvorrichtungsanordnung bereitzustellen, die insbesondere einen geringeren Platzbedarf aufweist und verbessert montiert oder ausgetauscht werden kann.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Ein Aspekt der Erfindung betrifft eine Kühlvorrichtungsanordnung umfassend ein Fahrzeugkarosserieelement mit einem Hohlprofil, das einen Aufnahmeraum bereitstellt und eine Kühlvorrichtung, umfassend ein Innenprofilbauteil an dessen Außenfläche ein Transportkanal vorgesehen ist, der von einem Wärmeträgerfluid durchströmbar ist. Die Abmessungen der Kühlvorrichtung sind derart an das Hohlprofil angepasst, dass die Kühlvorrichtung in den Aufnahmeraum des Hohlprofils einschiebbar ist und formschlüssig und ohne Verklebung in dem Aufnahmeraum gehalten ist.

Mit anderen Worten ist eine Kühlvorrichtung, insbesondere eine passive Kühlvorrichtung, bereitgestellt, deren Abmessungen derart auf einen Aufnahmeraum eines Hohlprofils von einem Fahrzeugkarosserieelement angepasst sind, dass dieses in den Aufnahmeraum eingeschoben werden kann und zumindest seitlich durch Wände des Hohlprofils gehalten wird. Hierdurch ist keine weitere Befestigung, insbesondere Verklebung, der Kühlvorrichtung notwendig, wodurch die Kühlvorrichtung recyclingfähig und herausziehbar ist. Außerdem kann ein vorhandener Platz im Fahrzeugkarosserieelement optimal genutzt werden.

Zum Kühlen beziehungsweise zum Entziehen von Wärme aus einem Fahrzeugsystem kann die Kühlvorrichtung ein Innenprofilbauteil und ein Transportkanal zum Führen eines Wärmeträgerfluids aufweisen. Das Innenprofilbauteil kann ein wärmeleitfähiges und/oder wärmespeicherfähiges Material aufweisen, das insbesondere Wärme vom Wärmeträgerfluid aufnehmen und zwischenspeichern kann. Beispielsweise kann das Innenprofilbauteil aus einem Metall oder wärmeleitfähigen Kunststoff ausgebildet sein oder zumindest eine Außenwand aus diesen Materialien umfassen. Vorzugsweise kann das Innenprofilbauteil weitere Wärmespeicher aufweisen, wie beispielsweise einen Phasenwechselspeicher beziehungsweise Latentwärmespeicher. Durch diese Ausbildung der Kühlvorrichtung können insbesondere Temperaturspitzen aufgenommen und ausgeglichen werden, wobei die Wärme nach der Temperaturspitze wieder abgegeben werden kann. Die Form des Innenprofilbauteils und damit der Kühlvorrichtung ist insbesondere an die Form des Hohlprofils angepasst, wobei diese beispielsweise eckig oder rohrförmig sein kann.

Das Wärmeträgerfluid, das durch den Transportkanal geleitet wird und beispielsweise von einer Fahrzeugkomponente, insbesondere einer Fahrzeugbatterie oder Recheneinheit, erwärmt wurde, kann im flüssigen, gasförmigen oder einem Mischzustand dazwischen vorliegen. Zum Beispiel kann Wasser, ein Wasser-Glykol-Gemisch oder ein Öl als Wärmeträgerfluid verwendet werden.

Das Fahrzeugkarosserieelement mit dem Hohlprofil kann beispielsweise ein Fahrzeugschweller oder ein Batterieprofil sein. Insbesondere kann eine Wärme einer Fahrzeugbatterie von dem Werbeträgerfluid der Kühlvorrichtung aufgenommen werden und zwischengespeichert werden. Durch die Erfindung ergibt sich der Vorteil, dass eine recyclingfähige Kühlvorrichtung bereitgestellt werden kann, die insbesondere schnell ein- oder ausgebaut werden kann.

Durch die Erfindung ergibt sich der Vorteil, dass Wärmespitzen verbessert aufgenommen und zwischengespeichert werden können. Des Weiteren wird ein Bauraumbedarf reduziert und optimal an vorhandene Aufnahmeräume angepasst. Da für die Kühlvorrichtung keine weiteren Befestigungen, insbesondere Verklebungen, benötigt werden, kann diese auch leicht entnommen beziehungsweise ausgetauscht werden.

Die Erfindung umfasst auch Ausgestaltungsformen, durch die sich zusätzliche Vorteile ergeben.

Eine Ausgestaltungsform sieht vor, dass die Kühlvorrichtung ferner eine Leitstruktur aufweist, die an der Außenfläche des Innenprofilbauteils angeordnet ist, wobei Abmessungen der Leitstruktur derart an das Hohlprofil angepasst sind, dass das Innenprofilbauteil mit der Leitstruktur in den Aufnahmeraum des Hohlprofils einschiebbar und formschlüssig und ohne Verklebung in dem Aufnahmeraum gehalten ist, wobei bei eingeschobenem Innenprofilbauteil mit Leitstruktur ein Zwischenraum zwischen dem Hohlprofil und dem Innenprofilbauteil ausgebildet ist, der den Transportkanal für das Wärmeträgerfluid bildet. Das heißt, dass um eine Außenfläche des Innenprofilbauteils eine Leitstruktur angeordnet werden kann, die den Abmessungen des Hohlprofils entspricht. Das Innenprofilbauteil kann hierbei beispielsweise in die Leitstruktur eingeschoben sein, wobei anschließend das Innenprofilbauteil mit Leitstruktur in den Aufnahmeraum des Hohlprofils eingeschoben werden kann. Die Leitstruktur kann in Form von Fluidführungsrippen vorgesehen sein, die den Transportkanal definieren, wobei der Transportkanal durch einen Zwischenraum gebildet wird, der zu einer Seite von der Außenfläche des Innenprofilbauteils und zum anderen von der Fläche des Hohlprofils definiert ist. Die Leitstruktur kann hierbei als eine Metall- oder Kunststoffstruktur bereitgestellt sein, beispielsweise durch einen 3-D Druck gefertigt, in die das Innenprofilbauteil eingeschoben werden kann. Hierbei ist vorzugsweise vorgesehen, dass die Leitstruktur und das Innenprofilbauteil nahtlos gefügte Bauteile darstellen. Durch diese Ausgestaltungsform ergibt sich der Vorteil, dass Material eingespart werden kann und dass durch die Abmessungen der Leitstruktur die Anpassung an das Hohlprofil erleichtert wird.

Eine weitere Ausgestaltungsform sieht vor, dass die Kühlvorrichtung ferner ein Außenprofilbauteil aufweist, in das das Innenprofilbauteil derart einschiebbar ist, dass das Außenprofilbauteil die Außenfläche des Innenprofilbauteils umgibt und in einem Zwischenraum zwischen dem Außenprofilbauteil und dem Innenprofilbauteil der Transportkanal gebildet ist, wobei das Außenprofilbauteil einen Phasenwechselspeicher aufweist, und wobei das Außenprofilbauteil derart an das Hohlprofil angepasst ist, dass dieses in den Aufnahmeraum des Hohlprofils einschiebbar und formschlüssig und ohne Verklebung in dem Aufnahmeraum gehalten ist. Mit anderen Worten kann vorgesehen sein, dass die Kühlvorrichtung ein Außenprofilbauteil aufweist in das das Innenprofilbauteil eingeschoben werden kann, sodass zwischen dem Innenprofilbauteil und dem Außenprofilbauteil ein Zwischenraum entsteht, der den Transportkanal für das Wärmeträgerfluid bildet. In dem Außenprofilbauteil, zum Beispiel in einer Wand des Außenprofilbauteils, kann ein Phasenwechselspeicher vorgesehen sein, der zusätzlich Wärme aufnehmen und zwischenspeichern kann. Der Phasenwechselspeicher kann beispielsweise bereits in dem Außenprofilbauteil vorhanden sein oder nachträglich eingefüllt werden. Ein Phasenwechselspeicher beziehungsweise Latentwärmespeicher kann thermische Energie in Form von Umwandlungsenthalpie aufnehmen, indem ein Phasenwechsel, insbesondere zwischen fest und flüssig, stattfindet. In dieser Variante kann das Außenprofilbauteil an die Abmessungen des Hohlprofils angepasst sein, sodass das Außenprofilbauteil, in das das Innenprofilteil eingefügt ist, nahtlos in den Aufnahmeraum des Hohlprofils einschiebbar ist. Wände des Außenprofilbauteils sind vorzugsweise aus einem wärmeleitfähigen Material ausgebildet, zum Beispiel einem Metall. In einer vereinfachten Variante kann das Außenprofilbauteil als Außenrohr angesehen werden, in das das Innenprofilbauteil eingefügt ist.

Eine weitere vorteilhafte Ausgestaltungsform sieht vor, dass in dem Zwischenraum zwischen dem Außenprofilbauteil und dem Innenprofilbauteil, durch den der Transportkanal gebildet ist, eine Leitstruktur zum Leiten des Wärmeträgerfluids angeordnet ist. Das heißt, dass beispielsweise Fluidführungsrippen in dem Zwischenraum angeordnet werden können, sodass das Wärmeträgerfluid um das Innenprofilbauteil geleitet werden kann. Hierdurch ergibt sich der Vorteil, dass eine bessere Wärmeverteilung erreicht werden kann.

Eine weitere Ausgestaltungsform sieht vor, dass das Innenprofilbauteil einen Phasenwechselspeicher aufweist, der dazu ausgebildet und angeordnet ist, Wärme des Wärmeträgerfluids durch Wechseln eines Phasenzustands aufzunehmen. Mit anderen Worten kann zum Zwischenspeichern der Wärme ein Phasenwechselspeicher im Innenprofilbauteil angeordnet sein, durch den Wärmespitzen verbessert aufgenommen werden können. Insbesondere kann der Phasenwechselspeicher des Innenprofilbauteils mit dem Phasenwechselspeicher des Außenprofilbauteils kombiniert werden.

In einer weiteren vorteilhaften Ausgestaltungsform ist vorgesehen, dass ein innerer Kern des Innenprofilbauteils als Phasenwechselspeicher ausgebildet ist. Das heißt, dass der Phasenwechselspeicher in das Innenprofilbauteil integriert sein kann. Alternativ oder zusätzlich kann der Phasenwechselspeicher in einer äußeren Struktur des Innenprofilbauteils angeordnet sein. Hierfür kann beispielsweise ein Zusatzprofil vorgesehen sein, das den Phasenwechselspeicher aufweist, wobei das Innenprofilbauteil in das Zusatzprofil mit dem Phasenwechselspeicher nahtlos eingefügt sein kann. Hierdurch kann eine Herstellung des Innenprofilbauteils mit Phasenwechselspeicher erleichtert werden.

Eine weitere Ausgestaltungsform sieht vor, dass das Innenprofilbauteil ferner einen Kabeldurchführungskanal aufweist. Insbesondere können Hohlräume in der Fahrzeugkarosserie eines Kraftfahrzeugs bereits Kabel führen, die durch den Kabeldurchführungskanal gelegt werden können. Beispielsweise können neben Kabeln auch Kabelstecker oder eine Verspannvorrichtung, insbesondere eine Gewindestange oder ein Seil durch den Kabeldurchführungskanal gelegt werden, beispielsweise um die Kühlvorrichtung in dem Hohlprofil zu verspannen.

In einer weiteren Ausgestaltungsform ist vorgesehen, dass das Innenprofilbauteil aus Kunststoff oder Metall ausgebildet ist. Auch kann beispielsweise die Leitstruktur ebenfalls aus Kunststoff oder Metall ausgebildet sein. Ein Kunststoff ergibt den Vorteil, dass dieser schnell durch einen 3D-Druck erzeugt werden kann, was Kosten spart. Der Kunststoff kann vorzugsweise aus einem wärmeleitfähigen Kunststoff gebildet sein, sodass eine Kühlleistung weiter verbessert werden kann. Bei der Verwendung von Metall ergibt sich der Vorteil, dass dieses zusätzliche Wärme aufnehmen kann.

Eine weitere Ausgestaltungsform sieht vor, dass ein Fluideinlass für das Wärmeträgerfluid seitlich zum Transportkanal oder parallel zum Transportkanal bereitgestellt ist. Das heißt, dass beispielsweise vorgesehen sein kann, dass der Fluideinlass quer zum Transportkanal bereitgestellt ist, um das Wärmeträgerfluid einzuleiten und/oder auszuleiten. Alternativ kann der Fluideinlass an einem Ende des Innenprofilbauteils vorgesehen sein, sodass das Wärmeträgerfluid in Richtung des Transportkanals eingeleitet werden kann.

Die erfindungsgemäße Kühlvorrichtungsanordnung kann bevorzugt für ein Kraftfahrzeug verwendet werden, insbesondere für einen Personenkraftwagen oder Lastkraftwagen, oder Personenbus oder Motorrad.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine Kühlvorrichtungsanordnung gemäß einer beispielhaften Ausführungsform;
- Fig. 2: ein Querschnitt durch eine Kühlvorrichtung gemäß einer beispielhaften Ausführungsform;
- Fig. 3: ein Querschnitt durch eine Kühlvorrichtung gemäß einer weiteren beispielhaften Ausführungsform;
- Fig. 4: ein Querschnitt durch eine Kühlvorrichtung gemäß einer weiteren beispielhaften Ausführungsform;
- Fig. 5: ein Querschnitt durch eine Kühlvorrichtung gemäß einer weiteren beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

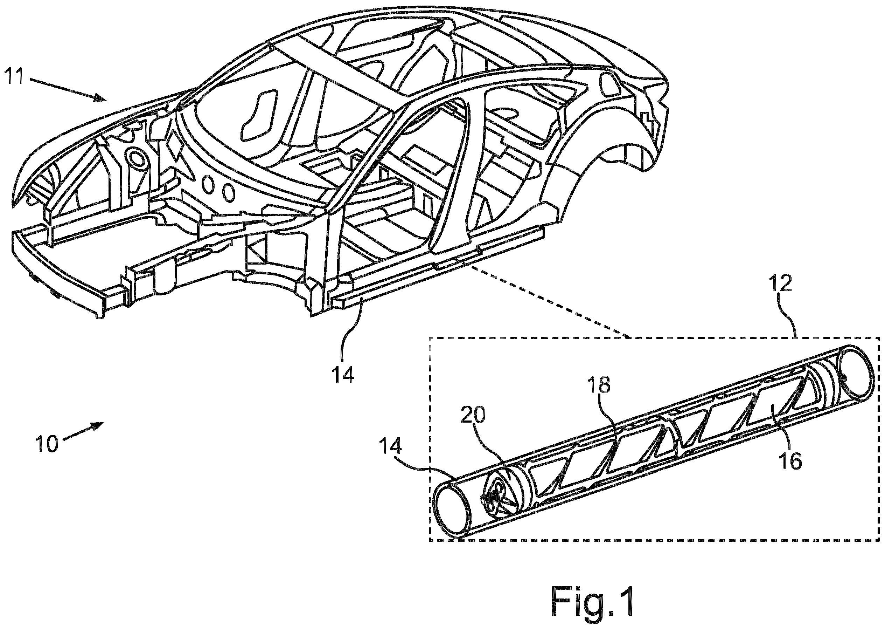

In Fig. 1 ist eine schematisch dargestellte Kühlvorrichtungsanordnung 10 gemäß einer beispielhaften Ausführungsform dargestellt. Die Kühlvorrichtungsanordnung 10 kann für eine Fahrzeugkarosserie 11 vorgesehen sein, die Fahrzeugkarosserieelemente 14 umfasst. In diesem Beispiel kann ein Fahrzeugkarosserieelement 14 beispielsweise ein Fahrzeugschweller sein, der ein Hohlprofil aufweist, das einen Aufnahmeraum für eine Kühlvorrichtung 12 bereitstellt. Neben einem Fahrzeugschweller können jedoch auch weitere Fahrzeugkarosserieelemente, die durch ein Hohlprofil einen Aufnahmeraum bereitstellen, zur Aufnahme der Kühlvorrichtung 12 verwendet werden. Insbesondere kann ein Batterieprofil einer Fahrzeugbatterie (nicht gezeigt) einen geeigneten Aufnahmeraum bereitstellen.

In dem Aufnahmeraum des Hohlprofils kann die Kühlvorrichtung 12 eingeschoben sein, die zum Kühlen von Fahrzeugkomponenten, insbesondere zur Aufnahme von Temperaturspitzen, ausgebildet sein kann. Die Kühlvorrichtung 12 kann dazu ein Innenprofilbauteil 16 aufweisen, das ein durch ein Wärmeträgerfluid durchströmtes Profil sein kann, welches Wärme aufnehmen und zwischenspeichern kann. Insbesondere können Materialien des Innenprofilbauteils 16 so gewählt werden, dass diese die Wärme des Wärmeträgerfluids verbessert aufnehmen können. Das Wärmeträgerfluid kann beispielsweise ein Gas, eine Flüssigkeit oder ein Gas-Flüssigkeitsgemisch sein, dass von einer Fahrzeugkomponente zu der Kühlvorrichtung geleitet wird.

In der gezeigten Ausführungsform kann um das Innenprofilbauteil 16 eine Leitstruktur 18 angeordnet sein, deren Abmessungen derart an das Hohlprofil angepasst sind, dass die Kühlvorrichtung 12 in den Aufnahmeraum des Hohlprofils einschiebbar ist und dort zumindest zu den Seiten formschlüssig und ohne Verklebung gehalten werden kann. Hierbei kann ein Transportkanal für das Wärmeträgerfluid durch einen Zwischenraum gebildet werden, der zwischen dem Innenprofilbauteil 16 und dem Fahrzeugkarosserieelement 14 entsteht, wobei die Leitstruktur Fluidführungsrippen aufweisen kann, durch die das Wärmeträgerfluid um das Innenprofilbauteil 16 geführt wird und es so umspült.

Das Weiteren können Endkappen 20 beziehungsweise Deckel vorgesehen sein, die die Kühlvorrichtung 12 zu den Endseiten hin abdichten, wobei die Kühlvorrichtung 12 beispielsweise mittels der Endkappen 20 in einer Position verspannt werden können.

Nachfolgend sind mehrere Ausführungsformen für Aufbauten der Kühlvorrichtung 12 beschrieben, die auch als Kombinationen ausgeführt werden können. Insbesondere sind in den nachfolgenden Figuren Querschnitte durch eine Längsrichtung der Kühlvorrichtung 12 dargestellt, wobei die Kühlvorrichtung 12 in diesen Ausführungsbeispielen rohrförmig dargestellt ist. Es wird angemerkt, dass die Kühlvorrichtung 12 weitere Formen aufweisen kann, die insbesondere an das Hohlprofil des Fahrzeugkarosserieelements 14 angepasst sein können.

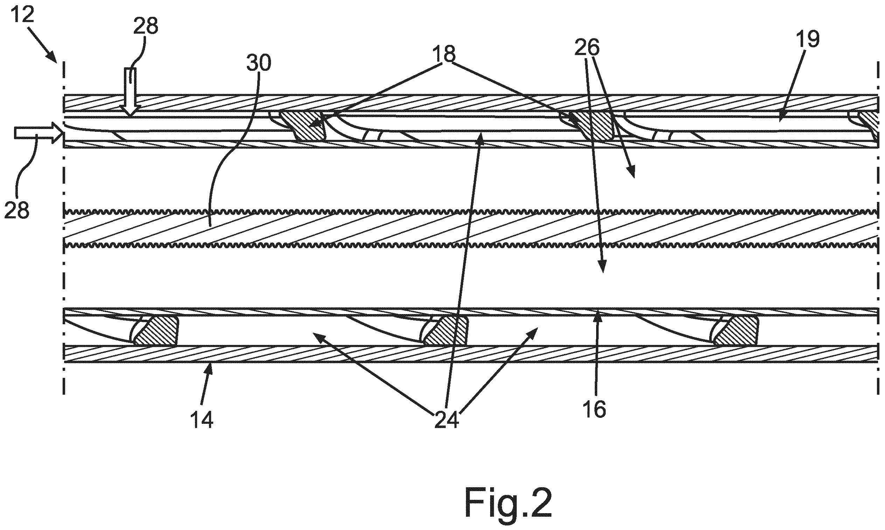

In Fig. 2 ist ein schematischer Querschnitt durch eine Kühlvorrichtung 12 gemäß einer beispielhaften Ausführungsform dargestellt. Hierbei ist das Innenprofilbauteil 16, das eine Leitstruktur 18 aufweist, in das Hohlprofil des Fahrzeugkarosserieelements 14 eingeschoben. Die Leitstruktur 18 kann Fluidführungsrippen aufweisen, die umlaufend um das Innenprofilbauteil 16 angeordnet sind und einen Abstand zu dem Fahrzeugkarosserieelement 14 definieren, sodass ein Zwischenraum zwischen dem Fahrzeugkarosserieelement 14 und dem Innenprofilbauteil 16 erzeugt wird, durch den ein Transportkanal 24 für das Wärmeträgerfluid bereitgestellt wird. Die Leitstruktur 18 kann neben den Fluidführungsrippen auch Versteifungsrippen 19 aufweisen, die eine Stabilität erhöhen.

Zum Einleiten des Wärmeträgerfluids können ein oder mehrere Fluideinlässe 28 vorgesehen sein, die beispielsweise seitlich oder parallel zu dem Transportkanal 24 vorgesehen sein können.

Das Innenprofilbauteil 16 kann zur verbesserten Wärmeaufnahme und Wärmespeicherung einen Phasenwechselspeicher 26 aufweisen, der beispielsweise als innerer Kern des Innenprofilbauteils 16 bereitgestellt ist.

Des Weiteren ist in dieser Fig. ein Kabeldurchführungskanal 30 dargestellt, der durch eine Mitte des Innenprofilbauteils 16 verläuft und durch den beispielsweise Kabel oder Kabelstecker, die durch Hohlprofile der Fahrzeugkarosserie 11 verlaufen können, durchgeführt werden können.

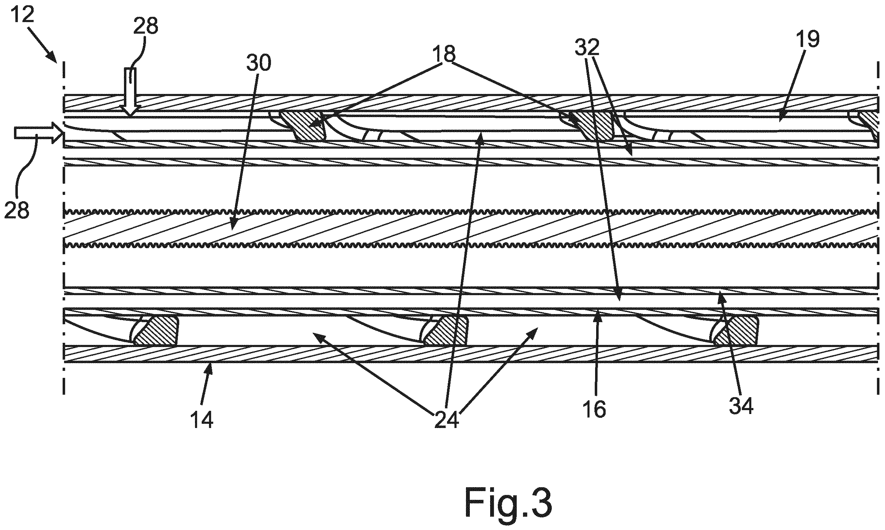

In Fig. 3 ist ein weiterer schematischer Querschnitt durch eine Kühlvorrichtung 12 gemäß einer weiteren beispielhaften Ausführungsform dargestellt. In dieser Ausführungsform ist das Innenprofilbauteil 16, das durch die Leitstruktur 18 umschlossen ist, wieder in den Hohlraum des Fahrzeugkarosserieelements 14 eingeschoben, sodass es dort formschlüssig und ohne Verklebung gehalten wird. Der Transportkanal 24 kann hier wieder durch den Zwischenraum gebildet werden, der zwischen dem Innenprofilbauteil 16 und dem Fahrzeugkarosserieelement 14 vorhanden ist.

In dieser Ausführungsform kann zusätzlich oder alternativ zu dem Phasenwechselspeicher 26 (in dieser Fig. nicht gezeigt), der als innerer Kern des Innenprofilbauteils 16 bereitgestellt ist, ein weiterer oder alternativer Phasenwechselspeicher 32 bereitgestellt sein, der in einer äußeren Struktur des Innenprofilbauteils 16 angeordnet ist. Hierbei kann beispielsweise ein innerer Kern 34 des Innenprofilbauteils 16 in ein zusätzliches Profil, das den weiteren oder alternativen Phasenwechselspeicher 32 aufweist, eingefügt sein.

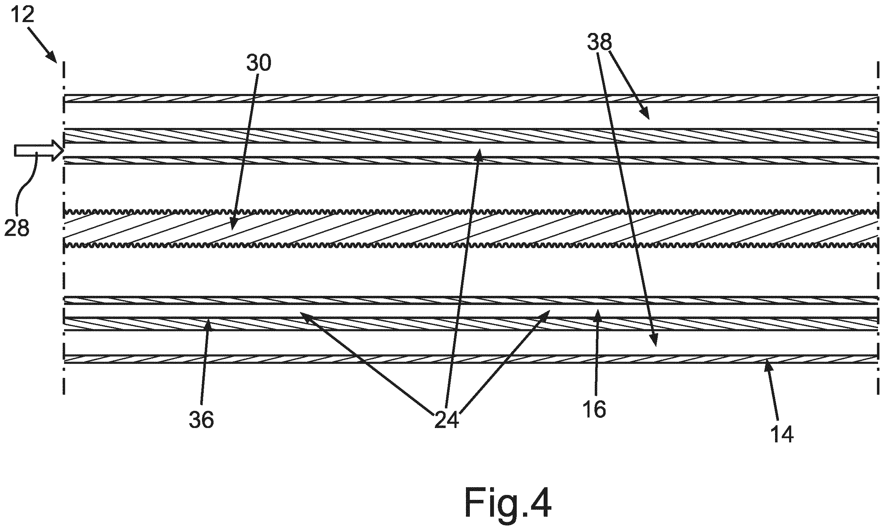

In Fig. 4 ist ein weiterer Querschnitt einer Kühlvorrichtung 12 gemäß einer weiteren beispielhaften Ausführungsform dargestellt. In dieser Ausführungsform ist das Innenprofilbauteil 16 in ein Außenprofilbauteil 36 eingefügt, sodass sich der Transportkanal 24 durch einen Zwischenraum zwischen dem Innenprofilbauteil 16 und dem Außenprofilbauteil 36 ergibt. Das Außenprofilbauteil kann hierbei derart an das Hohlprofil des Fahrzeugkarosserieelements 14 angepasst sein, dass die Kühlvorrichtung 12 nahtlos in den Aufnahmeraum des Hohlprofils eingeschoben werden kann, und dort formschlüssig und ohne Verklebung gehalten wird. Das Außenprofilbauteil kann hierbei einen äußeren Phasenwechselspeicher 38 aufweisen, der also zwischen dem Fahrzeugkarosserieelement 14 und dem Transportkanal 24 angeordnet ist. Das heißt, der Phasenwechselspeicher 38 ist hier außenliegend. Das Innenprofilbauteil 16 kann hierbei beispielsweise auch die in den vorhergehenden Ausführungsbeispielen beschriebenen Phasenwechselspeicher 26, 32 aufweisen.

In der in Fig. 4 gezeigten Ausführungsform kann beispielsweise vorgesehen sein, dass die Kühlvorrichtung 12 keine Leitstruktur aufweist und der Transportkanal 24 nur durch den Zwischenraum zwischen dem Außenprofilbauteil 36 und dem Innenprofilbauteil 16 gebildet wird.

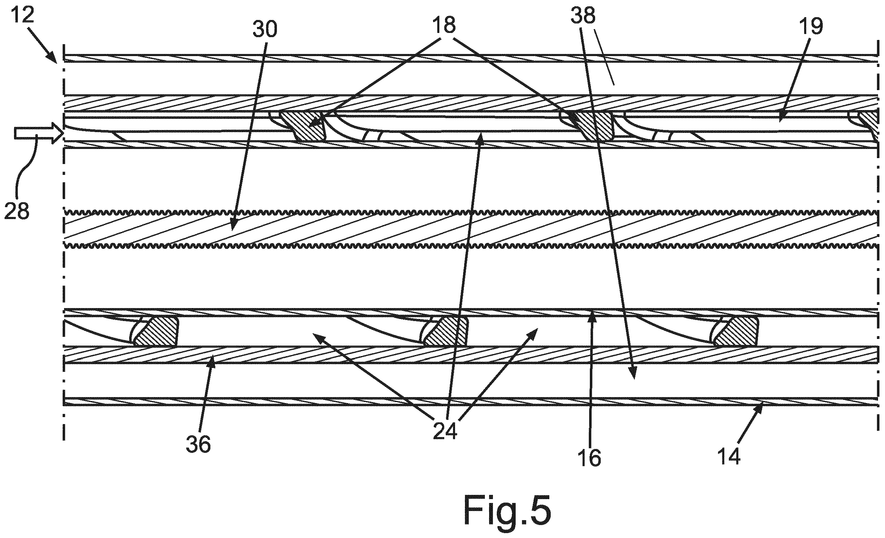

In Fig. 5 ist ein weiterer Querschnitt durch eine Kühlvorrichtung 12 gemäß einer weiteren beispielhaften Ausführungsform dargestellt. Diese Ausführungsform kann auf der zuvor gezeigten Ausführungsform von Fig. 4 basieren, wobei zusätzlich eine Leitstruktur 18 in dem Zwischenraum zwischen dem Außenprofilbauteil 36 und dem Innenprofilbauteil 16 eingefügt ist. Auch hier ist der äußere Phasenwechselspeicher 38 in dem Außenprofilbauteil 36 angeordnet, sodass dieser zwischen dem Fahrzeugkarosserieelement 14 und dem Transportkanal 24 angeordnet ist. Wie bei dem Ausführungsbeispiel zuvor kann auch hier ein zusätzlicher Phasenwechselspeicher 26, 32 des Innenprofilbauteils 16 vorgesehen sein oder nicht.

Insgesamt zeigen die Beispiele, wie ein verschiebbares, passives Kühlsystem inklusive Wärmespeicherung bereitgestellt werden kann.

## Patentansprüche

1. Kühlvorrichtungsanordnung (10), umfassend:
- ein Fahrzeugkarosserieelement (14) mit einem Hohlprofil, das einen Aufnahmeraum bereitstellt;
- eine Kühlvorrichtung (12), umfassend ein Innenprofilbauteil (16) an dessen Außenfläche ein Transportkanal (24) vorgesehen ist, der von einem Wärmeträgerfluid durchströmbar ist;
- wobei Abmessungen der Kühlvorrichtung (12) derart an das Hohlprofil angepasst sind, dass die Kühlvorrichtung (12) in den Aufnahmeraum des Hohlprofils einschiebbar ist und formschlüssig und ohne Verklebung in dem Aufnahmeraum gehalten ist.

2. Kühlvorrichtungsanordnung (10) nach Anspruch 1, wobei die Kühlvorrichtung (12) ferner eine Leitstruktur (18) aufweist, die an der Außenfläche des Innenprofilbauteils (16) angeordnet ist,
- wobei Abmessungen der Leitstruktur (18) derart an das Hohlprofil angepasst sind, dass das Innenprofilbauteil (16) mit der Leitstruktur (18) in den Aufnahmeraum des Hohlprofils einschiebbar und formschlüssig und ohne Verklebung in dem Aufnahmeraum gehalten ist;
- wobei bei eingeschobenen Innenprofilbauteil (16) mit Leitstruktur (18) ein Zwischenraum zwischen dem Hohlprofil und dem Innenprofilbauteil (16) ausgebildet ist, der den Transportkanal (24) für das Wärmeträgerfluid bildet.

3. Kühlvorrichtungsanordnung (10) nach Anspruch 1, wobei die Kühlvorrichtung (12) ferner ein Außenprofilbauteil (36) aufweist, in das das Innenprofilbauteil (16) derart einschiebbar ist, dass das Außenprofilbauteil (36) die Außenfläche des Innenprofilbauteils (16) umgibt und in einem Zwischenraum zwischen dem Außenprofilbauteil (36) und dem Innenprofilbauteil (16) der Transportkanal (24) ausgebildet ist,
- wobei das Außenprofilbauteil (36) einen Phasenwechselspeicher (38) aufweist, und
- wobei das Außenprofilbauteil (36) derart an das Hohlprofil angepasst ist, dass dieses in den Aufnahmeraum des Hohlprofils einschiebbar und formschlüssig und ohne Verklebung in dem Aufnahmeraum gehalten ist.

4. Kühlvorrichtungsanordnung (10) nach Anspruch 3, wobei in dem Zwischenraum, der den Transportkanal (24) bildet, eine Leitstruktur (18) zum Leiten des Wärmeträgerfluids angeordnet ist.

5. Kühlvorrichtungsanordnung (10) nach einem der vorhergehenden Ansprüche, wobei das Innenprofilbauteil (16) einen Phasenwechselspeicher (26, 32) aufweist, der dazu ausgebildet und angeordnet ist, Wärme des Wärmeträgerfluids durch Wechseln eines Phasenzustands aufzunehmen.

6. Kühlvorrichtungsanordnung (10) nach Anspruch 5, wobei ein innerer Kern des Innenprofilbauteils (16) als Phasenwechselspeicher (26) ausgebildet ist.

7. Kühlvorrichtungsanordnung (10) nach Anspruch 5, wobei der Phasenwechselspeicher (32) in einer äußeren Struktur des Innenprofilbauteils (16) angeordnet ist.

8. Kühlvorrichtungsanordnung (10) nach einem der vorhergehenden Ansprüche, wobei das Innenprofilbauteil (16) ferner einen Kabeldurchführungskanal (30) aufweist.

9. Kühlvorrichtungsanordnung (10) nach einem der vorhergehenden Ansprüche, wobei das Innenprofilbauteil (16) aus Kunststoff oder Metall ausgebildet ist.

10. Kühlvorrichtungsanordnung (10) nach einem der vorhergehenden Ansprüche, wobei ein Fluideinlass (28) für das Wärmeträgerfluid seitlich zum Transportkanal (24) oder parallel zum Transportkanal (24) bereitgestellt ist.
